(19) Europäisches Patentamt

European Patent Office

Office européen des brevets

(11) **EP 1 159 151 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(21) Anmeldenummer: **00916900.4**

(22) Anmeldetag: **06.03.2000**

(51) Int Cl.:
**B60K 28/16** (2006.01)     **B60T 8/00** (2006.01)

(86) Internationale Anmeldenummer:
**PCT/EP2000/001874**

(87) Internationale Veröffentlichungsnummer:
**WO 2000/053447 (14.09.2000 Gazette 2000/37)**

(54) **ANTRIEBSSCHLUPFREGELVERFAHREN MIT SOLL-QUERBESCHLEUNIGUNG UND REGELSCHALTUNG FÜR DIE DURCHFÜHRUNG DES ANTRIEBSSCHLUPFREGELVERFAHRENS**

TRACTION-SLIP CONTROL METHOD WITH THEORETICAL TRANSVERSAL ACCELERATION AND CONTROL CIRCUIT FOR CARRYING OUT SUCH A TRACTION-SLIP CONTROL METHOD

PROCEDE D'ANTIPATINAGE AVEC ACCELERATION TRANSVERSALE THEORIQUE, ET CIRCUIT DE REGLAGE DESTINE A LA MISE EN OEUVRE DE CE PROCEDE

(84) Benannte Vertragsstaaten:
**DE FR**

(30) Priorität: **08.03.1999 DE 19910054**

(43) Veröffentlichungstag der Anmeldung:
**05.12.2001 Patentblatt 2001/49**

(73) Patentinhaber:
 • **Continental Teves AG & Co. oHG**
   **60488 Frankfurt (DE)**
 • **DaimlerChrysler AG**
   **70567 Stuttgart (DE)**

(72) Erfinder:
 • **SCHAFIYHA, Scharad**
   **D-65812 Bad Soden (DE)**

 • **STEINBRÜCK, Jörg**
   **D-63674 Altenstadt-Oberau (DE)**
 • **SCHÜTZ, Christof**
   **D-65439 Flörsheim (DE)**
 • **FISCHLE, Gerhard**
   **D-73732 Esslingen (DE)**
 • **JUNG, Joachim**
   **D-73347 Mühlhausen (DE)**
 • **PFISTER, Carola**
   **D-73207 Plochingen (DE)**

(56) Entgegenhaltungen:
| | |
|---|---|
| EP-A- 0 439 191 | EP-A- 0 694 464 |
| DE-A- 19 515 059 | US-A- 4 998 593 |
| US-A- 5 276 624 | US-A- 5 734 595 |

EP 1 159 151 B1

**Beschreibung**

Die Erfindung betrifft ein Antriebsschlupfregelverfahren für ein Kraftfahrzeug, bei dem anhand einer Regelstrategie eine Antriebsschlupfregelphase für ein jeweiliges Antriebsrad aktiviert wird, wenn dessen Antriebsschlupf einen vorgebbaren Schlupfschwellwert (Ssw) überschreitet.

Die Erfindung betrifft ferner eine Regelschaltung zum Regeln der Fahrstabilität eines Fahrzeuges, bei der zur Festlegung eines Bahnverlaufs bestimmende Eingangsgrößen erfasst und verarbeitet werden, so dass durch eine Beeinflussung einer Übertragung von Motormomenten auf einzelne Räder eine Antriebsschlupfregelung durchgeführt werden kann.

Ein gattungsgemäßes Verfahren und eine gattungsgemäße Vorrichtung sind aus dem Buch M. Burckhard, "Fahrwerktechnik: Radschlupf-Regelsysteme", Vogel-Buchverlag, 1993 bekannt.

Dokument US 5 734 595 offenbart ein Verfahren und eine Vorrichtung entsprechend dem Oberbegriff der Ansprüche 1 und 9.

Während einer Antriebsschlupfregelung in engen Kurven (Spitzkehren) wird durch die Radentlastung des kurveninneren Antriebsrades in Verbindung mit empfindlichen Schlupfregelschwellen das Motormoment auf ein niedriges Niveau geregelt. Beim weiteren Beschleunigungsvorgang aus der Kurve heraus - insbesondere bei hohen Reibwerten, wo sich der Radschlupf wieder schnell stabilisiert - fehlt aufgrund der Fahrstabilität mögliche und vom Fahrer gewünschte Traktion.

Der Erfindung liegt die Aufgabe zu Grunde, ein gattungsgemäßes Verfahren so weiterzuentwickeln, dass eine Traktionserhöhung bei Kurvenfahrten, insbesondere bei einem während der Kurvenfahrt erfolgenden Beschleunigungsvorgang, erzielt wird.

Erfindungsgemäß wird diese Aufgabe dadurch gelöst, dass ein gattungsgemäßes Verfahren so durchgeführt wird, dass eine Referenz-Querbeschleunigung für eine zu erwartende Kurvenfahrt ermittelt wird, dass eine tatsächliche Querbeschleunigung ermittelt wird, dass eine Differenz zwischen der Referenz-Querbeschleunigung $a_{y-ref}$ und der tatsächlichen Querbeschleunigung $a_{y-ist}$ gebildet wird, wobei ermittelt wird, ob der Betrag der Differenz einen Grenzwert überschreitet und wobei in dem Fall, dass der Betrag der Differenz den Grenzwert überschreitet, die Regelstrategie so verändert wird, dass an wenigstens zwei Rädern ein höheres Drehmoment umgesetzt werden kann als in dem Fall, dass der Betrag der Differenz den Grenzwert nicht überschreitet.

Die Erfindung sieht ferner vor, dass eine gattungsgemäße Regelschaltung so ausgestaltet wird, dass die Regelschaltung wenigstens ein Mittel zur Bestimmung und/oder Speicherung einer Referenz-Querbeschleunigung und einen Vergleicher enthält, wobei der Vergleicher die Referenz-Querbeschleunigung $a_{y-ref}$ mit einer ermittelten, tatsächlichen Querbeschleunigung vergleicht.

Die Erfindung sieht also vor, durch einen Vergleich zwischen einer Referenz-Querbeschleunigung und einer tatsächlichen Querbeschleunigung zu ermitteln, ob eine Beeinflussung einer Übertragung von Motormomenten auf die einzelnen Räder erfolgen soll.

Eine vorteilhafte Durchführungsform des Verfahrens, beziehungsweise zweckmäßige Ausführungsform der Vorrichtung zeichnet sich dadurch aus, dass - wenn der Betrag der Differenz den Grenzwert überschreitet - an allen angetriebenen Rädern ein höheres Drehmoment umgesetzt wird.

Zu einer Erhöhung der Zuverlässigkeit ist es zweckmäßig, dass die Referenz-Querbeschleunigung in Abhängigkeit von der tatsächlichen Querbeschleunigung ermittelt wird.

Ferner ist es vorteilhaft, dass die Erhöhung des Drehmomentes nur dann erfolgt, wenn die Referenz-Querbeschleunigung $a_{y-ref}$ größer ist als ein Schwellwert $K_2$.

Eine besonders zweckmäßige Ausführungsform des Verfahrens und der Vorrichtung zeichnet sich dadurch aus, dass für wenigstens ein Rad des Fahrzeuges ein an ihm maximal einsetzbares Motormoment ermittelt wird.

Es ist besonders vorteilhaft, dass für alle angetriebenen Räder des Fahrzeuges jeweils das an ihnen maximal einsetzbare Motormoment ermittelt wird.

Zu einer weiteren Erhöhung der Fahrstabilität ist es zweckmäßig, dass das maximal einsetzbare Motormoment durch einen Schlupfbedarf wenigstens eines inneren Rades ermittelt wird.

Eine vorteilhafte Durchführungsform des Verfahrens, beziehungsweise Ausführungsform der Vorrichtung, zeichnet sich dadurch aus, dass eine Erhöhung des an den Rädern umgesetzten Drehmomentes nur dann erfolgt, wenn Schlupfsignale einen definierten Schwellenwert nicht überschreiten.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Zeichnungen.

Von den Abbildungen zeigt

Fig. 1 eine Darstellung einer einen Schleppzeiger bildenden Referenzquerbeschleunigung $a_{y-ref}$ in Abhängigkeit von der Fahrzeit bei einer Kurvenfahrt und

Fig. 2 Werte für ein an einem angetriebenen Rad maximal einsetzbares Drehmoment in Abhängigkeit von der Fahrzeit bei der Kurvenfahrt.

Anhand der Abbildungen wird nachfolgend erläutert, wie sich durch die Erfindung Fahrsituationen erkennen lassen, bei denen die Gefahr einer zu geringen Traktion besteht und bei denen die Traktion durch einen gezielten Eingriff erhöht wird.

Die Erkennung der Fahrsituation basiert auf einer schnellen Querbeschleunigungsabnahme. Dazu wird ein Schleppzeiger $[a_{y\_ref}]$ aus der tatsächlichen, abnehmenden Querbeschleunigung $[a_{y\_ist}]$ gebildet. Diese Referenzgröße soll eine Querbeschleunigungsabnahme darstellen, die einer "normalen" Kurvenfahrt entspricht und der tatsächlichen Querbeschleunigung mit einer definierten Schrittweite nacheilt.

Das Auflenken wird erkannt, wenn die positive Differenz der Referenz- und der tatsächlichen Querbeschleunigung ein bestimmtes Band überschreitet, insbesondere, wenn gilt:

$$[(a_{y\_ref} - a_{y\_ist})] > K1.$$

Somit führt ein Auf- und Zulenken des Fahrers nicht zu einer fehlerhaften Erkennung und ungerechtfertigten Auswirkung.

Bei Einfahrt in eine Kurve wird der Schleppzeiger $a_{y\text{-ref}}$ ebenso wie die tatsächliche Querbeschleunigung $a_{y\_ist}$ erhöht. Im Scheitelpunkt der Kurve ist die Querbeschleunigung maximal. Danach nimmt sie ab. Bei einer Auflenksituation verringert sich die tatsächliche Querbeschleunigung sehr schnell. Dadurch wird die Differenz zwischen der Referenzbeschleunigung und der tatsächlichen Querbeschleunigung sehr groß. Die Größe dieser Differenz ist ein Indikator für das Vorliegen einer Auflenksituation.

Ferner wird ermittelt, ob eine stabile Auflenksituation vorliegt. Dies wird vorzugsweise durch eine Untersuchung des Laufverhaltens eines kurveninneren Rades festgestellt. Üblicherweise wäre bei einer Kurvenfahrt ein kurvenäußeres Rad für die Stabilität der Fahrsituation heranzuziehen. Bei einer Ausfahrt aus der Kurve ist jedoch die Betrachtung des kurveninneren Rades vorteilhafter, denn hierdurch läßt sich signaltechnisch anzeigen, dass das Fahrzeug im Prinzip eine Geradeaus-Fahrt vor sich hat, so dass eine Wankneigung kaum vorliegt.

Sobald das kurveninnere Rad, das für eine Wankneigung am empfindlichsten ist, wieder stabil läuft, kann wieder eine volle Drehmomentübertragung auf das Rad erfolgen und daher auf alle angetriebenen Räder ein volles Drehmoment übertragen werden.

Des Weiteren ist es zweckmäßig, dass diese Korrekturen nur in engen Kurven mit hoher Querbeschleunigung wirken, da in diesen Fällen eine Radentlastung stattfindet, die zu einer Regelung mit hoher Motormomentenreduzierung führt. Deshalb muss für die Erkennung die Referenzquerbeschleunigung oberhalb einer definierten Schwelle liegen, das heißt, es sollte gelten:

$$[a_{y\_ref}] > K2.$$

Die Stabilität des Fahrzeugs und das am Rad maximal absetzbare Motormoment wird durch den Schlupfbedarf des kurveninneren Rades ermittelt. Der aus den Radsignalen ermittelte, gefilterte Schlupf darf, während die Maßnahme wirken soll, einen definierten Schwellenwert nicht überschreiten.

Wurde eine stabile Auflenksituation während einer Antriebsmomentenregelung erkannt, kann der Gradient der Motormomentenzugabe in Abhängigkeit der Differenz $[a_{y\_ref} - a_{y\_ist}]$ erhöht werden.

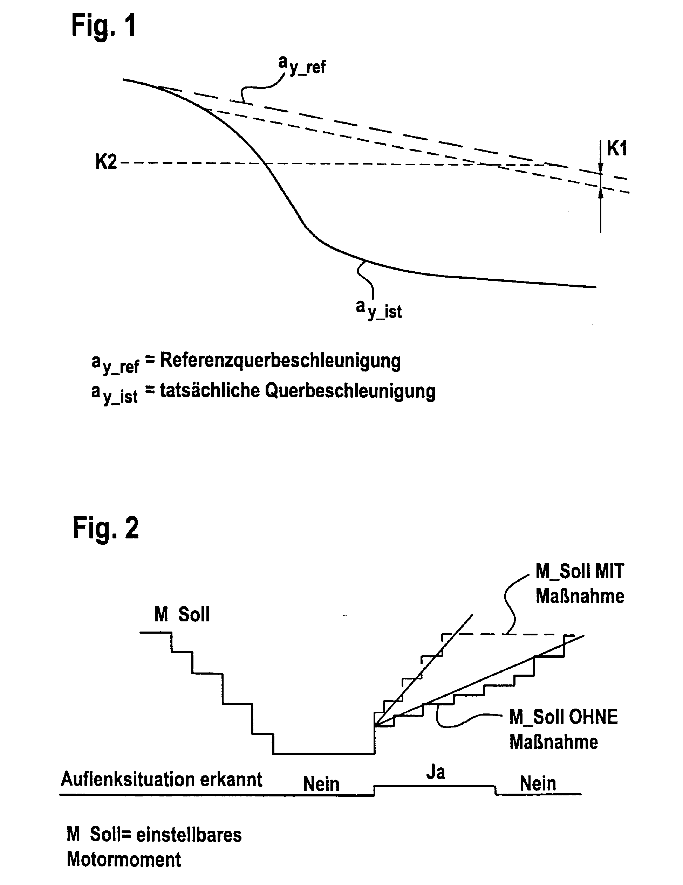

In dem in Fig. 2 dargestellten Fall wird das Drehmoment vor Erkennung der Auflenksituation stufenweise verringert und anschließend stufenweise erhöht. Anstelle einer stufenweisen Veränderung ist bei dem erfindungsgemäßen Antriebsschlupfregelverfahren eine kontinuierliche Veränderung des Drehmomentes gleichfalls möglich. Die dargestellten Stufen sind schaltungstechnisch bedingt, da bei einer mit Proportional-Integral-Differential (PID) - Reglern ausgestatteten Regelschaltung stufenweise Veränderungen stabiler realisiert werden können.

Fig. 2 zeigt, dass die Veränderung der Regelstrategie des Antriebsschlupfregelverfahrens einen zusätzlichen Beitrag zu einer bereits vorgesehenen Erhöhung der Motormomentzugabe ergibt.

Das oben beschriebene Verfahren wird in einem elektronischen Stabilisierungsprogramm (ESP)- wie dem MK20E-I-ESP-Code für den Daimler Chrysler BR203 - implementiert. Bei Fahrversuchen zeigt sich eine hohe Traktion in Verbindung mit einer sehr guten Fahrstabilität.

Die sensorische Bestimmung erfolgt mit einer geeigneten Messanordnung, die auch als Sensorik bezeichnet wird. Bei der Sensorik handelt es sich insbesondere um Bestandteile eines in dem Fahrzeug bereits vorhandenen Fahrdynamik-Regelsystems, wie dem sogenannten EFP (Electronisches Fahrpedal)-System.

**Patentansprüche**

1.  Antriebsschlupfregelverfahren für ein Kraftfahrzeug, bei dem anhand einer Regelstrategie eine Antriebsschlupfregelphase für ein jeweiliges Antriebsrad aktiviert wird, wenn dessen Antriebsschlupf einen vorgebbaren Schlupfschwellwert (Ssw) überschreitet, worin eine Referenz-Querbeschleunigung für eine zu erwartende Kurvenfahrt ermittelt wird, dass eine tatsächliche Querbeschleunigung ermittelt wird, dass eine Differenz zwischen der Referenz-Querbeschleunigung ($a_{y\text{-ref}}$) und der tatsächlichen Querbeschleunigung ($a_{y-ist}$) gebildet wird, wobei ermittelt wird, ob der Betrag der Differenz einen Grenzwert überschreitet und wobei in dem Fall, dass der Betrag der Differenz den Grenzwert überschreitet, die Regelstrategie verändert wird, **dadurch gekennzeichnet, dass** die Regelstrategie so verändert wird, dass an wenigstens zwei Rädern ein höheres Drehmoment umgesetzt werden kann als in dem Fall, dass der Betrag der Differenz den Grenzwert nicht überschreitet.

2. Antriebsschlupfregelverfahren nach Anspruch 1, **dadurch gekennzeichnet, dass** in dem Fall, dass der Betrag der Differenz den Grenzwert überschreitet, an allen angetriebenen Rädern ein höheres Drehmoment umgesetzt wird.

3. Antriebsschlupfregelverfahren nach einem oder beiden der Ansprüche 1 oder 2, **dadurch gekennzeichnet, dass** die Referenz-Querbeschleunigung in Abhängigkeit von der tatsächlichen Querbeschleunigung ermittelt wird.

4. Antriebsschlupfregelverfahren nach einem oder mehreren der vorangegangenen Ansprüche, **dadurch gekennzeichnet, dass** die Erhöhung des Drehmomentes nur dann erfolgt, wenn die Referenz-Querbeschleunigung $a_{y-ref}$ größer ist als ein Schwellwert $K_2$.

5. Antriebsschlupfregelverfahren nach einem oder mehreren der vorangegangenen Ansprüche, **dadurch gekennzeichnet, dass** für wenigstens ein Rad des Fahrzeuges ein an ihm maximal einsetzbares Motormoment ermittelt wird.

6. Antriebsschlupfregelverfahren nach Anspruch 5, **dadurch gekennzeichnet, dass** für alle angetriebenen Räder des Fahrzeuges jeweils das an ihnen maximal einsetzbare Motormoment ermittelt wird.

7. Antriebsschlupfregelverfahren nach Anspruch 5 oder 6, **dadurch gekennzeichnet, dass** das maximal einsetzbare Motormoment durch einen Schlupfbedarf wenigstens eines inneren Rades ermittelt wird.

8. Antriebsschlupfregelverfahren nach einem oder mehreren der vorangegangenen Ansprüche, **dadurch gekennzeichnet, dass** eine Erhöhung des an den Rädern umgesetzten Drehmomentes nur dann erfolgt, wenn Schlupfsignale einen definierten Schwellenwert nicht überschreiten.

9. Regelschaltung zum Regeln der Fahrstabilität eines Fahrzeuges, bei der zur Festlegung eines Bahnverlaufs bestimmende Eingangsgrößen erfasst und verarbeitet werden, so dass durch eine Beeinflussung einer Übertragung von Motormomenten auf einzelne Räder eine Antriebsschlupfregelung durchgeführt werden kann, worin die Regelschaltung wenigstens ein Mittel zur Bestimmung und/oder Speicherung einer Referenz-Querbeschleunigung für eine zu erwartende Kurvenfahrt und einen Vergleicher enthält, wobei der Vergleicher die Referenz-Querbeschleunigung $a_{y-ref}$ mit einer ermittelten, tatsächlichen Querbeschleunigung vergleicht, wobei ermittelt wird, ob der Betrag der Differenz einen Grenzwert überschreitet und wobei in dem Fall, dass der Betrag der Differenz den Grenzwert überschreitet, die Regelstrategie verändert wird, **dadurch gekennzeichnet, dass** die Regelstrategie so verändert wird, dass an wenigstens zwei Rädern ein höheres Drehmoment umgesetzt werden kann als in dem Fall, dass der Betrag der Differenz den Grenzwert nicht überschreitet.

10. Regelschaltung nach Anspruch 9, **dadurch gekennzeichnet, dass** der Vergleicher eine Differenz zwischen der Referenz-Querbeschleunigung ($a_{y-ref}$) und der tatsächlichen Querbeschleunigung ($a_{y-ist}$) ermittelt.

**Claims**

1. Traction slip control method for an automotive vehicle wherein a traction slip control phase for a respective drive wheel is activated by way of a control strategy when the traction slip of said wheel exceeds a predeterminable slip threshold value (Ssw), wherein a reference lateral acceleration is determined for a cornering manoeuvre to be expected, an actual lateral acceleration is determined, a difference between the reference lateral acceleration ($a_{y-ref}$) and the actual lateral acceleration ($a_{y-actual}$) is calculated, and it is determined whether the amount of the difference exceeds a limit value, and the control strategy is modified in the case that the amount of the difference exceeds the limit value, **characterized in that** the control strategy is modified in such a manner that on at least two wheels higher torque can be realized than in the case when the amount of the difference does not exceed the limit value.

2. Traction slip control method as claimed in claim 1, **characterized in that** when the amount of the difference exceeds the limit value, a higher torque is realized on all driven wheels.

3. Traction slip control method as claimed in any one or both of claims 1 or 2, **characterized in that** the reference lateral acceleration is determined in dependence on the actual lateral acceleration.

**4.** Traction slip control method as claimed in any one or more of the preceding claims, **characterized in that** the torque is only increased when the reference lateral acceleration $a_{y-ref}$ is higher than a threshold value $K_2$.

**5.** Traction slip control method as claimed in any one or more of the preceding claims, **characterized in that** for at least one wheel of the vehicle an engine torque is determined which can maximally be used on the said wheel.

**6.** Traction slip control method as claimed in claim 5, **characterized in that** for all driven wheels of the vehicle each time that engine torque is determined that can maximally be used on them.

**7.** Traction slip control method as claimed in claim 5 or claim 6, **characterized in that** the maximally utilizable engine torque is determined by a slip requirement of at least one inward wheel.

**8.** Traction slip control method as claimed in any one or more of the preceding claims, **characterized in that** an increase of the torque realized on the wheels is carried out only when slip signals do not exceed a defined threshold value.

**9.** Control circuit for controlling the driving stability of a vehicle, wherein defining input quantities for fixing a course are sensed and processed so that traction slip control can be performed by influencing a transmission of engine torques to individual wheels, wherein the control circuit comprises at least one means for determining and/or storing a reference lateral acceleration for a cornering manoeuvre to be expected and a comparator, said comparator comparing the reference lateral acceleration $a_{y-ref}$ with a determined actual lateral acceleration, and it is determined whether the amount of the difference exceeds a limit value, and the control strategy is modified in the case that the amount of the difference exceeds the limit value, **characterized in that** the control strategy is modified in such a manner that on at least two wheels higher torque can be realized than in the case when the amount of the difference does not exceed the limit value.

**10.** Control circuit as claimed in claim 9, **characterized in that** the comparator determines a difference between the reference lateral acceleration ($a_{y-ref}$) and the actual lateral acceleration ($a_{y-actual}$).

**Revendications**

**1.** Procédé d'antipatinage à l'accélération pour un véhicule automobile dans lequel, à l'aide d'une stratégie de régulation, on active une phase d'antipatinage à l'accélération pour chaque roue motrice lorsque son patinage à l'accélération dépasse une valeur de seuil de patinage (Ssw) qui peut être prédéfinie, dans lequel on détermine une accélération transversale de référence pour un trajet en courbe à venir, on détermine une accélération transversale effective, on forme une différence entre l'accélération transversale de référence ($a_{y\_réf}$) et l'accélération transversale effective ($a_{y\_réelle}$), et on détermine si la valeur de la différence dépasse une valeur limite et dans le cas dans lequel la valeur de la différence dépasse la valeur limite, on modifie la stratégie de régulation, **caractérisé en ce que** la stratégie de régulation est modifiée de manière que l'on puisse appliquer sur au moins deux roues un couple de rotation plus élevé que dans le cas dans lequel la valeur de la différence ne dépasse pas la valeur limite.

**2.** Procédé d'antipatinage à l'accélération selon la revendication 1, **caractérisé en ce que** dans le cas dans lequel la valeur de la différence dépasse la valeur limite on applique sur toutes les roues motrices un plus grand couple de rotation.

**3.** Procédé d'antipatinage à l'accélération selon une ou les deux revendications 1 ou 2, **caractérisé en ce que** l'accélération transversale de référence est déterminée en fonction de l'accélération transversale effective.

**4.** Procédé d'antipatinage à l'accélération selon une ou plusieurs des revendications précédentes, **caractérisé en ce que** l'augmentation du couple de rotation ne s'effectue que si l'accélération transversale de référence ($a_{y\_réf}$) est supérieure à une valeur de seuil ($K_2$).

**5.** Procédé d'antipatinage à l'accélération selon une ou plusieurs des revendications précédentes, **caractérisé en ce qu'**on détermine pour au moins une roue d'un véhicule un couple moteur maximal qui peut être utilisé sur celle-ci.

**6.** Procédé d'antipatinage à l'accélération selon la revendication 5, **caractérisé en ce que** pour toutes les roues motrices du véhicule on détermine chaque fois le couple moteur maximal qui peut être utilisé sur celles-ci.

**7.** Procédé d'antipatinage à l'accélération selon la revendication 5 ou 6, **caractérisé en ce que** le couple moteur maximal qui peut être utilisé est déterminé par un besoin de patinage d'au moins une roue intérieure.

8. Procédé d'antipatinage à l'accélération selon une ou plusieurs des revendications précédentes, **caractérisé en ce qu'**une augmentation du couple de rotation appliqué sur les roues ne s'effectue que si des signaux de patinage ne dépassent pas une valeur de seuil définie.

9. Circuit de régulation pour réguler la tenue de route d'un véhicule dans lequel on détecte et traite des grandeurs d'entrée déterminantes pour la définition d'une trajectoire, de sorte qu'en influençant une transmission des couples moteurs à certaines roues, on peut exécuter une régulation du patinage à l'accélération, le circuit de régulation contenant au moins un moyen pour déterminer et/ou mémoriser une accélération transversale de référence pour un trajet en courbe à venir ainsi qu'un comparateur, le comparateur comparant l'accélération transversale de référence ($a_{y\_réf}$) à une accélération transversale effective déterminée, et on détermine si la valeur de la différence dépasse une valeur limite et dans le cas dans lequel la valeur de la différence dépasse la valeur limite on modifie la stratégie de régulation, **caractérisé en ce que** la stratégie de régulation est modifiée de manière que l'on puisse appliquer sur au moins deux roues un couple de rotation plus élevé que dans le cas dans lequel la valeur de la différence ne dépasse pas la valeur limite.

10. Circuit de régulation selon la revendication 9, **caractérisé en ce que** le comparateur détermine une différence entre l'accélération transversale de référence ($a_{y\text{-}réf}$) et l'accélération transversale effective ($a_{y\_réelle}$).

# Fig. 1

$a_{y\_ref}$

K2

K1

$a_{y\_ist}$

$a_{y\_ref}$ = Referenzquerbeschleunigung

$a_{y\_ist}$ = tatsächliche Querbeschleunigung

# Fig. 2

M_Soll MIT
Maßnahme

M Soll

M_Soll OHNE
Maßnahme

Auflenksituation erkannt   Nein   Ja   Nein

M Soll= einstellbares
Motormoment